Europäisches Patentamt

European Patent Office

Office européen des brevets

(11) Publication number: **0 044 433**
**A1**

## (12) EUROPEAN PATENT APPLICATION

(21) Application number: **81104910.5**

(22) Date of filing: **25.06.81**

(51) Int. Cl.³: **B 29 C 5/00**
**B 29 D 3/00**

(30) Priority: **26.06.80 DK 2735/80**

(43) Date of publication of application:
**27.01.82 Bulletin 82/4**

(84) Designated Contracting States:
**BE DE FR GB IT NL SE**

(71) Applicant: **Falck Formco ApS**
**Gersonsvej 33**
**DK-2900 Hellerup(DK)**

(72) Inventor: **Falck, Erik Luja**
**Amaliegade 28**
**DK-1256 Copenhagen K.(DK)**

(74) Representative: **Koepsell, Helmut, Dipl.-Ing.**
**Mittelstrasse 7**
**D-5000 Köln 1(DE)**

(54) **Insertion used in the pouring of synthetic materials in several layers.**

(57) Insertion to be applied in the pouring of synthetic material in several layers, especially layers of epoxy resin under machine components, consisting of one or several distance pieces (1) of a total extent equalling the distance between foundation and machine component, and further of a number of perpendicularly hereon situated discs (2) the number of which equals the number of pouring layers, and placed at intervals equalling the thickness of the layers. The distance piece situated nearest to the foundation can consist of a spring (3).

When the first layer is poured up to and covering the first disc, the said disc will during the hardening absorb occuring dynamics, and when the next layer is poured both the first and the second disc will absorb this force, and so on. It will thus be possible to pour very thick layers without any risk of crimping.

FIG. 1.

The invention relates to an insertion to be applied in the pouring of synthetic materials in several layers for the prevention of crimping.

By the pouring of synthetic materials especially epoxy resin in several layers there is a risk of crimping of the individual layers during hardening. This has during many years caused noticeable problems, especially in case of pouring under machine components. Remedies by way of embedding metal bolts or scraps or the like have been attempted, but with poor effect.

It is the object of the invention to devise an insertion to be applied in the pouring of synthetic materials especially epoxy pourings for the elimination of the said inconveniences. This is according to the invention achieved by means of insertions designed as specified in Claim 1.

For the use of the described insertion the first layer is poured out until the first disc has been fully covered. When this layer hardens the said disc will on account of its horizontal extent perpendicularly on the distance piece prevent the layer from crimping, as it will absorb all the dynamic in the epoxy parallel with the distance piece. When the second layer is poured until disc number two is covered, the discs 1 and 2 will absorb the dynamic effect arising during the hardening of the second layer. Continuing in this manner and by adapting the number of distance pieces and discs to the number of layers preferred , it will be possible to pour arbitrarily thick layers without any risk of crimping.

An especially advantageous embodiment of the insertion is specified in Claim 2. By designing the distance pieces as tube sections and place the discs between them, the discs will as a matter of course absorb the great dynamic effect appearing during the hardening. It will furthermore offer the advantage of allowing adaptation of the insertions to the mounting place following a given distance.

To facilitate the mounting procedure the insertion can be designed as specified in Claim 3. The mounting will then be effected by compressing the spring and pushing the insertion into the proper position.

When the distance piece nearest to the foundation can be a spring, it is because this distance piece is not affected by the upward-going force, which will only be absorbed by the superjacent tube sections and discs.

To lighten the task of mounting further, a key pin made of e.g. wood can be inserted inside tube sections, discs or spring as specified in Claim 4.

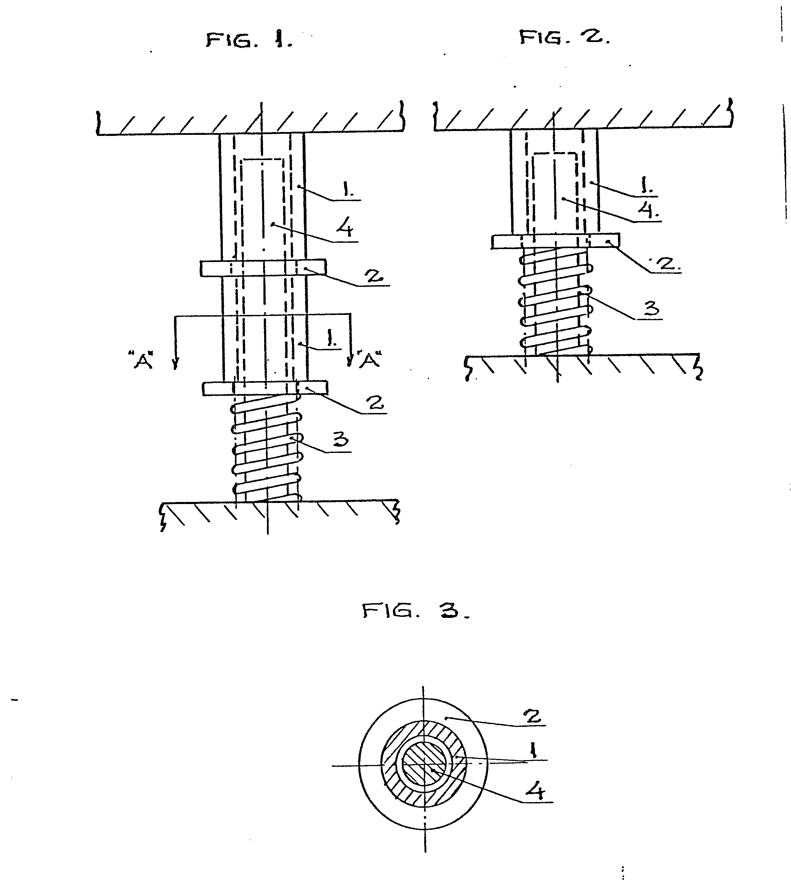

The drawing shows an insertion according to the invention in which Fig. 1 shows an embodiment of a three-layer pouring

Fig 2   shows another embodiment of two-layer pouring, and

Fig 3   shows a section "A - A" of Figure 1.

The insertion consists in a simple form, as shown in the drawing of Figure 2, of 1 distance piece (1), 1 disc (2), 1 spring (3) and 1 key pin (4). Distance piece, disc and spring are placed, with the key pin inserted, perpendicularly between machine component and foundation. Figure 1 shows an embodiment intended for a three layer pouring, in the said case applying 2 distance pieces (1), 2 discs (2), 1 spring (3) and 1 key pin (4). Figure 3 shows by way of a section "A - A" of Figure 1 in which manner the key pin is situated in the insertion.

For further explanation of the description is enclosed a model of the invention showing an insertion for a three-layer pouring partly embedded in epoxy resin.

PATENT CLAIMS

1. Insertion to be applied in the pouring of synthetic
   materials especially epoxy resin in several layers
   and in particular for the pouring under machine
   components, c h a r a c t e r i z e d  i n  t h a t
   the insertion is made up of one or several distance
   pieces to a total extent equalling the distance
   between foundation and machine component, and in
   that perpendicular on the distance pieces are placed
   discs in a number equal to the number of pourings,
   and at an interval equal to the thickness of the
   individual layers.

2. Insertion according to Claim 1  c h a r a c t e r i z e d
   i n  t h a t  the distance pieces being tube sections
   of an extent equalling the individual pouring layers
   and having the discs placed between the tube sections.

3. Insertion according to Claims 1 and 2  c h a r a c t e r-
   i z e d  i n  t h a t  the distance pieces situated
   nearest to the foundation constitute a spring.

4. Insertion according to Claims 2 and 3  c h a r a c t e r-
   i z e d  i n  t h a t  inside the tube sections, discs
   and spring is inserted a non-metallic key pin.

-o-

FIG. 1.

FIG. 2.

1

4

2

"A"

1.

"A"

2

3

2.

3

FIG. 3.

2

1

4

**0044433**

## PARTIAL EUROPEAN SEARCH REPORT
which under Rule 45 of the European Patent Convention
shall be considered, for the purposes of subsequent
proceedings, as the European search report

European. Patent
Office

Application number

EP 81 10 4910

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - B - 1 239 892 (MASCHINENFA- BRIK ZUCKERMANN) <br> * The whole document * <br> -- | 1-4 | B 29 C 5/00 <br> B 29 D 3/00 <br> F 16 M 7/00 |
| | GB - A - 139 751 (R.D. WAGNER) <br> * Figures * <br> -- | 1-4 | |
| | GB - A - 1 517 501 (J.B. MEIKLE) <br> * The whole document * <br> -- | 1-4 | **TECHNICAL FIELDS SEARCHED (Int. Cl.³)** |
| | CH - A - 447 971 (SULZER) <br> * The whole document * <br> -- | 1-4 | B 29 C <br> B 29 D <br> F 16 M 7/00 |
| | GB - A - 1 084 097 (JERSEY PRODUC- TION) <br> * The whole document * <br> -- <br> ./. | 1-4 | |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely:

Claims searched incompletely: 1-4

Claims not searched:

Reason for the limitation of the search: The physical meaning of absorbing dynamics parallel to the distance pieces on the insert and the relation of that to the crimping and the casting in several layers is obscure.

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| Place of search | Date of completion of the search | Examiner |
|---|---|---|
| The Hague | 28-10-1981 | LABEEUW |

EPO Form 1505.1 06.78

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>DE - A - 2 116 080</u> (H. SCOBEL) <br> * The whole document * <br><br> -- <br><br> <u>US - A - 3 604 306</u> (G.G. DENHOLM) <br> * Claims; figures 2-5 * <br><br> -- <br><br> <u>BE - A - 683 075</u> (SAREK) <br> * Claims; figures * <br><br> -- <br><br> <u>US - A - 4 173 329</u> (M.R. STITH) <br> * The whole document * <br><br> ---- | 1-4 <br><br><br><br> 1-4 <br><br><br><br> 1-4 <br><br><br><br> 1-4 | |
| | | | TECHNICAL FIELDS SEARCHED (Int. Cl.³) |

EPO Form 1505.3  06.78